# EUROPÄISCHE PATENTANMELDUNG

(11) **EP 4 585 315 A1**
(43) Veröffentlichungstag der Anmeldung: **16.07.2025**
(21) Anmeldenummer: 24151692.1
(22) Anmeldetag: 12.01.2024
(51) Int. Cl.: B05C 1/08, B41F 31/02, B41F 31/06

(54) **ENDABDICHTUNG**

(71) Anmelder: DAETWYLER SWISSTEC AG, 3368 Bleienbach (CH)
(72) Erfinder: ENGEL, Carina Tamara, 5024 Küttigen (CH); AESCHLIMANN, Juerg Paul, 8610 Uster (CH)
(74) Vertreter: Keller Schneider Patent- und Markenanwälte AG

(57) **Zusammenfassung**

Die vorliegende Anmeldung betrifft eine Dichtung zur stirnseitigen Abdichtung einer flüssigkeitsspeichernden Kammer, insbesondere einer Rakelkammer, gegenüber einer in der Kammer rotierenden Walze, insbesondere einer Rasterwalze, umfassend einen länglichen Grundkörper (10) mit einer Oberseite (12), welche bei der Verwendung der rotierenden Walze zugewandt ist, eine der Oberseite (12) gegenüberliegende Unterseite (11), zwei sich gegenüberliegende Seitenflächen (13, 14), welche bei der Verwendung senkrecht zur Rotationsachse der rotierenden Walze stehen und zwei sich gegenüberliegende Stirnseiten (15, 16), welche bei der Verwendung parallel zur Rotationsachse der rotierenden Walze stehen. Die Oberseite (12) des Grundkörpers (10) verfügt über einem Kontaktbereich (12b) zum Anlegen der Dichtung an die rotierende Walze. Auf der Oberseite (12) des länglichen Grundkörpers (10) ist ein Verschleißschutzelement (30) angebracht, welches sich wenigstens teilweise über den Kontaktbereich (12b) erstreckt, so dass der Kontaktbereich (12b) vor Verschleiß durch die rotierende Walze geschützt wird. Das Verschleißschutzelement (30) verfügt über eine rechteckige Fläche , die von vier Seitenkanten begrenzt wird und welche auf der Oberseite (12) des länglichen Grundkörpers (10) aufliegt. Weiter umfasst das Verschleißschutzelement zwei Profilschenkel, die sich entlang von zwei einander gegenüberliegenden Seitenkanten der rechteckigen Fläche über deren gesamte Länge erstrecken und von der rechteckigen Fläche in einer Richtung abstehen. Der längliche Grundkörper (10) verfügt über zwei längliche Schlitze, die sich in Längsrichtung innerhalb des Grundkörpers (10) von der Oberseite (12) aus in Richtung zur Unterseite (11) erstrecken und welche parallel zueinander stehen. Die Profilschenkel des Verschleißschutzelements sind in diese länglichen Schlitze aufgenommen. Die vorliegende Anmeldung betrifft ferner ein entsprechendes Verschleißschutzelement, ein Kammerrakelsystem mit einer derartigen Dichtung sowie ein Verfahren zur Herstellung einer derartigen Dichtung.

## Beschreibung

### Technisches Gebiet

Die Erfindung betrifft eine Dichtung umfassend einen Grundkörper und ein Verschleissschutzelement zur stirnseitigen Abdichtung einer flüssigl<eitsspeichernden Kammer, insbesondere einer Rakelkammer, gegenüber einer in der Kammer rotierenden Walze, insbesondere einer Rasterwalze. Weiter bezieht sich die Erfindung auf ein I<ammerral<elsystem, umfassend eine flüssigl<eitsspeichernde Kammer, insbesondere einer Rakelkammer an welcher eine rotierbare Walze, insbesondere eine Rasterwalze, angeordnet ist und wobei die flüssigl<eitsspeichernde Kammer wenigstens im Bereich eines ersten stirnseitigen Endes der Walze mit einer Dichtung abgedichtet ist. Des Weiteren bezieht sich die Erfindung auf ein Verfahren zur Herstellung einer Dichtung mit einem Verschleissschutzelement.

### Stand der Technik

Druckwerke für den Hochdruck beinhalten üblicherweise eine Rasterwalze, über welche eine auf einem Druckformzylinder vorliegende Druckform mit Druckfarbe eingefärbt wird. Der zu bedruckende Bedruckstoff, z.B. Papier- oder Stoffbahnen, wird mit einem Gegendruckzylinder geführt und an den Druckformzylinder gedrückt, wobei die Farbe von der Druckform auf den Bedruckstoff übertragen wird.

Die Einfärbung der Rasterwalze erfolgt heutzutage meist mit einem I<ammerral<elsystem. Das I<ammerral<elsystem weist eine mit der Druckfarbe gefüllte einseitig offene Kammer auf, welche mit der offenen Seite an die Rasterwalze gedrückt wird, so dass Druckfarbe auf die rotierende Rasterwalze übertragen wird. Überschüssige Druckfarbe wird dabei mit einer sogenannten Arbeitsrakel von der Rasterwalzenoberfläche abgestreift. Entlang der Längsachse der Rakelkammer und der Rasterwalze erfolgt die Abdichtung der Rakelkammer auf der einen Seite durch die Arbeitsrakel und auf der anderen Seite durch eine zusätzliche Schliessral<el. Stirnseitig, d.h. im Bereich der freien Enden der Rasterwalze, wird die Kammer mit sogenannten Kammerrakeldichtungen (auch als Endseal bezeichnet) abgedichtet. In I<ammerral<elsystem agieren die Endabdichtungen wie auch die Rakel als Verschleissteile. Das Zusammenspiel dieser beiden Komponenten ist entscheidend für eine konstante und saubere Farbübertragung während des gesamten Druckprozesses.

In diesem Zusammenhang beschreibt die Die US 9,085,131 B1 (Valley Holdings, LLC) beispielsweise ein Endseal für eine Farbkammer einer Druckmaschine, z.B. einer Flexodruckmaschine. Die Dichtung verfügt über einen komprimierbaren Grundkörper mit einer Oberseite umfassend einen zentralen Bereich zum Anlegen an den Druckzylinder und zwei daran anschliessende gegeneinander geneigte Bereiche zur Auflegen von Rakeln. Der Grundkörper kann z.B. aus Schaumstoff, Gummi, Kunststoff oder einem Kompositmaterial bestehen. An der Oberseiten kann ein flächiges Verschleissschutzpolster aus Filz, Polyethylen oder Polyester angebracht sein. Wie die Verschleissschutzpolster befestigt sind, wird nicht erläutert. Es liegt nahe, dass diese aufgeklebt werden, was aufwändig und fehleranfällig ist.

Die EP 3 539 776 A1 (wiguTec Gummitechnologie GmbH &Co. I<G) beschreibt ein Dichtungselement zur stirnseitigen Abdichtung einer Rakelkammer gegenüber einer rotierenden Walze. Der Dichtungskörper besitzt einen Grundkörper und ein Formteil, wobei der Grundkörper z.B. aus einem elastischen, insbesondere geschäumten Material besteht und fest mit dem Formteil verklebt ist. Das Formteil besteht insbesondere aus einem Material mit einer geringeren Elastizität als der Grundkörper, z.B. ein festes, gummi- oder kautschukartiges Material. Zusätzlich sind der Grundkörper und das Formteil auf der Oberseite formschlüssig miteinander verbunden, über Vorsprünge am Formteil und korrespondierende Ausnehmungen in der Oberseite. Im Bereich der Dichtungsfläche besteht der Dichtungskörper aus einem vulkanisierbaren Material in welches ein Gleitmaterial (z.B. PTFE) einvulkanisiert ist. Die Dichtungsfläche besteht dabei aus zwei beabstandeten Teilflächen mit einer dazwischenliegenden kanalförmigen Ausnehmung. Die Herstellung von solch komplexen Endabschlüssen ist jedoch aufwändig und teuer.

Es besteht daher nach wie vor Bedarf nach verbesserten Lösungen, welche die vorgenannten Nachteile nicht oder in geringerem Ausmass aufweisen.

### Darstellung der Erfindung

Aufgabe der Erfindung ist es daher, eine verbesserte Endabdichtung zur stirnseitigen Abdichtung einer flüssigl<eitsspeichernden Kammer, insbesondere einer Rakelkammer, gegenüber einer an der Kammer anliegenden und rotierenden Walze, insbesondere einer Rasterwalze, bereitzustellen. Im Besonderen soll die Endabdichtung möglichst einfach und flexibel herstellbar sein und eine zuverlässige Abdichtung ermöglichen.

Die Lösung der Aufgabe ist durch die Merkmale des unabhängigen Anspruchs 1 definiert. Gemäss der Erfindung umfasst eine Dichtung zur stirnseitigen Abdichtung einer flüssigl<eitsspeichernden Kammer, insbesondere einer Rakelkammer, gegenüber einer in der Kammer rotierenden Walze, insbesondere einer Rasterwalze, einen länglichen Grundkörper mit einer Oberseite, welche bei der Verwendung der rotierenden Walze zugewandt ist, eine der Oberseite gegenüberliegende Unterseite, zwei sich gegenüberliegende Seitenflächen, welche bei der Verwendung senkrecht zur Rotationsachse der rotierenden Walze stehen und zwei sich gegenüberliegende Stirnseiten, welche bei der Verwendung parallel zur Rotationsachse der rotierenden Walze stehen. Die Oberseite des Grundkörpers verfügt über einen Kontaktbereich zum Anlegen der Dichtung an die rotierende Walze. Auf der Oberseite des länglichen Grundkörpers ist ein Verschleissschutzelement angebracht, welches sich wenigstens teilweise über den Kontaktbereich erstreckt, so dass der Kontaktbereich vor Verschleiss durch den rotierenden Zylinder geschützt wird. Das Verschleissschutzelement verfügt über eine rechteckige Fläche, die von vier Seitenkanten begrenzt wird und welche auf der Oberseite des länglichen Grundkörpers aufliegt. Weiter umfasst das Verschleissschutzelement zwei Profilschenkel, die sich entlang von zwei einander gegenüberliegenden Seitenkanten der vier Seitenkanten der rechteckigen Fläche über deren gesamte Länge erstrecken und von der rechteckigen Fläche in einer Richtung abstehen. Der längliche Grundkörper verfügt über zwei längliche Schlitze, die sich in Längsrichtung innerhalb des Grundkörpers von der Oberseite aus in Richtung zur Unterseite erstrecken und welche parallel zueinander stehen. Die Profilschenkel des Verschleissschutzelements sind in diese länglichen Schlitze aufgenommen.

Durch diese Ausgestaltung der Dichtung lässt sich diese einfach aus zwei Einzelteilen herstellen, wobei nach der Herstellung der Einzelteile das Verschleissschutzelement über die beiden Profilschenkel einfach auf den Grundkörper aufgesteckt werden kann. Durch diese Verbindung zwischen Grundkörper und Verschleissschutzelement kann letzteres einfach ausgetauscht werden, beispielsweise wenn ein beschädigtes oder abgenutztes Verschleissschutzelement gegen ein neues Verschleissschutzelement ausgetauscht werden soll. Zudem ist das Verschleissschutzelement einfach ausgestaltet, wodurch dieses leicht durch ein Extrusionsverfahrens hergestellt werden kann. Dadurch, dass der Grundkörper über zwei Schlitze verfügt, weist dieser eine höhere Flexibilität auf, wodurch die Dichtwirkung zwischen Dichtung und einer darauf laufenden Walze verbessert werden kann. Weiter kann das Verschleisselement mit Grundkörpern unterschiedlicher Dimensionen verwendet werden, ohne dass hierfür aufwändige Anpassungen notwendig wären.

Der längliche Grundkörper weist vorzugsweise eine quaderförmige Form auf, verfügt also demnach über insgesamt sechs Seitenflächen, bzw. über die Ober- und Unterseite, den zwei Seitenflächen sowie den zwei Stirnflächen. Die Oberseite ist vorzugsweise flach ausgestaltet, kann jedoch auch ein Krümmung, insbesondere eine konkave Krümmung aufweisen, welche insbesondere über einen Krümmungsradius verfügt, der dem Radius einer Mantelfläche der mit der Dichtung zu verwendenden Walze entspricht.

Die Seitenflächen verbinden die Oberseite mit der Unterseite und stehen insbesondere senkrecht zu den Stirnseiten und/oder senkrecht zur Unterseite des Grundkörpers. Bevorzugt deckt das Verschleissschutzelement die Oberseite im Kontaktbereich über die gesamte Breite von der einen zur anderen Seitenfläche ab und/oder im Kontaktbereich sind das Verschleissschutzelement und der Grundkörper an der Oberseite im Wesentlichen gleich breit. Damit wird dort, wo das Verschleissschutzelement vorliegt, der Kontaktbereich über die gesamte Breite vollständig geschützt. Gemäss einer bevorzugten Ausführungsform deckt das Verschleissschutzelement die Oberseite im Kontaktbereich in einer Richtung entlang der Längsachse des Grundkörpers und/oder in einer Richtung senkrecht zur Zylinderachse der Walze über die gesamte Länge des Kontaktbereichs ab.

Der längliche Grundkörper ist vorzugsweise aus einem Filz, einem Polymermaterial, einem Kompositmaterial (z.B. Filz und Gummi), Gummi, Moosgummi, Kautschuk, Naturkautschuk, Zellkautschuk, Zellvull<ollan, Schaumstoff, Polyurethan-Schaumstoff und/oder Neopren hergestellt. Vorzugsweise ist der längliche Grundkörper jedoch aus einem Polymermaterial, insbesondere aus einem Elastomer oder einem thermoplastischen Elastomer hergestellt. Alternativ kann der längliche Grundkörper jedoch auch aus einem Thermoplast oder einem Duroplast hergestellt sein Das Polymermaterial ist insbesondere ein Homopolymer oder ein Copolymer. Der Grundkörper ist vorzugsweise aus einem geschäumten Polymermaterial, z.B. einem geschäumten Polyethylen, hergestellt.

Unter Kontaktbereich wird in der vorliegenden Anmeldung derjenige Bereich verstanden, welcher bei bestimmungsgemässem Gebrauch an die rotierende Walze anliegt.

Vorzugsweise ist der gesamte Kontaktbereich mit dem Verschleissschutzelement abgedeckt. Damit wird dieser vollständig geschützt. Dies ist jedoch nicht unbedingt notwendig. In einer besonderen Ausführungsform erstreckt sich das Verschleissschutzelement lediglich teilweise über den Kontaktbereich, während die übrigen Abschnitte des Kontaktbereichs bevorzugt durch die Oberseite des Grundkörpers gebildet werden.

Im Besonderen deckt das Verschleissschutzelement den Kontaktbereich in einer Richtung entlang der Längsachse des Grundkörpers und/oder in einer Richtung senkrecht zur Zylinderachse der Walze nur teilweise ab, wobei bevorzugt die übrigen Abschnitte des Kontaktbereichs durch die Oberseite des Grundkörpers gebildet werden und/oder das Verschleissschutzelement deckt den Kontaktbereich über die Breite des Kontaktbereichs nur abschnittsweise ab, wobei bevorzugt die übrigen Abschnitte des Kontaktbereichs durch die Oberseite des Grundkörpers gebildet werden.

Als rechteckige Fläche wird eine viereckige Fläche verstanden, deren Innenwinkel alle rechte Winkel sind. Das heisst, dass jede der Seitenkanten der rechteckigen Fläche jeweils in einem Winkel von 90° relativ zu zwei weiteren Seitenkanten der rechteckigen Fläche steht. Einander gegenüberliegende Seitenkanten der rechteckigen Fläche weisen hierbei jeweils dieselbe Länge auf.

Vorzugsweise weist die rechteckige Fläche zwei einander gegenüberliegende Seitenkanten auf, welche länger sind, als die zwei weiteren Seitenkanten. In diesem Fall erstrecken sich die Profilschenkel vorzugsweise jeweils entlang der zwei längeren Seitenkanten. Alternativ können sich in diesem Fall die Profilschenkel jedoch auch entlang der zwei kürzeren Seitenkanten der rechteckigen Fläche erstrecken. In einer besonderen Ausführungsform ist die rechteckige Fläche quadratisch, das heisst, dass alle vier Seitenkanten in diesem Fall gleich lang sind.

Durch die Ausgestaltung des Verschleissschutzelements mit einer rechteckigen Fläche sowie den zwei sich entlang von zwei einander gegenüberliegenden Seitenkanten desselben erstreckenden Profilschenkel weist das Verschleissschutzelement im Wesentlichen einen Querschnitt in der Form eines U auf. Demnach liegt das Verschleissschutzelement im Wesentlichen in der Form eines U-Profils vor. Die beiden Profilschenkel erstrecken sich von derjenigen Seite der rechteckigen Fläche ab, welche beim bestimmungsgemässen Gebrauch der Dichtung auf dem Kontaktbereich aufliegt.

Entsprechende Profile können z.B. durch Extrusion, insbesondere durch ein Strangextrusionsverfahren relativ einfach und kostengünstig hergestellt werden, wobei diese anschliessend auf die benötigte Länge zugeschnitten werden können. Alternativ können derartige Profile jedoch auch durch Spritzguss hergestellt werden.

Das Verschleissschutzelement ist vorzugsweise aus einem Polymermaterial gefertigt, insbesondere einem Polymermaterial mit einer hohen Abriebfestigkeit. Insbesondere bevorzugt ist das Verschleissschutzelement aus einem Thermoplast oder Duroplast hergestellt. Alternativ kann das Verschleissschutzelement jedoch auch aus einem Elastomer oder einem thermoplastischen Elastomer hergestellt sein. Das Verschleissschutzelement kann beispielsweise aus Polyester, Polytetrafluorethylen, Polyethylen, High-Density Polyethylen, Polypropylen, Polyoxymethylene, Silikon, Ethylen-Propylen-Dien-Kautschuk, Polyetheretherketon, Polyethylenterephthalat, Polyvinylidenfluorid und/oder Polyamid hergestellt sein.

Das Verschleissschutzelement ist bevorzugt aus einem ungeschäumten Material hergestellt.

Die rechteckige Fläche weist vorzugsweise eine Dicke, d.h. beim bestimmungsgemässen Gebrauch der Dichtung eine Ausdehnung in vertikaler Richtung von der Oberseite des länglichen Grundkörpers weg gerichtete Ausdehnung von 0.5mm bis 10mm, insbesondere von 1mm bis 5mm auf. Die rechteckige Fläche weist vorzugsweise eine Breite, das heisst eine Ausdehnung rechtwinklig zur Längsrichtung des länglichen Grundkörpers von 5mm bis 50mm, insbesondere von 8mm bis 15mm auf.

Die beiden Profilschenkel weisen vorzugsweise eine Dicke von 0.5mm bis 5mm, besonders bevorzugt von 0.7mm bis 2mm auf. Die Ausdehnung der beiden Profilschenkel von der rechteckigen Fläche weg beträgt vorzugsweise von 2mm bis 20mm, insbesondere bevorzugt von 4mm bis 10mm. Insbesondere ist die Ausdehnung der Profilschenkel von der rechteckigen Fläche weg derart gewählt, dass diese kleiner ist, als die Erstreckung der beiden länglichen Schlitze von der Oberseite des Grundkörpers aus, mit welchem des Verschleisselement zusammen die erfindungsgemässe Dichtung bildet. Vorzugsweise ist die Ausdehnung der Profilschenkel dabei derart gewählt, dass diese maximal 75%, besonders bevorzugt maximal 50% der Erstreckung der beiden länglichen Schlitze von der Oberseite des länglichen Grundkörpers aus entspricht.

Die beiden länglichen Schlitze des länglichen Grundkörpers erstrecken sich von der Oberseite aus in Richtung zur Unterseite, das heisst die beiden länglichen Schlitze erstrecken sich zumindest teilweise von der Oberseite aus durch den länglichen Grundkörper hindurch. Vorzugsweise erstrecken sich die beiden länglichen Schlitze über mindestens 50% der Distanz zwischen der Oberseite und der Unterseite. In einer besonders bevorzugten Ausführungsform erstrecken sich die beiden länglichen Schlitze jedoch von der Oberseite bis zur Unterseite.

Die beiden länglichen Schlitze erstrecken sich in Längsrichtung nicht über die gesamte Länge des länglichen Grundkörpers, sondern nur über einen Teil dieser Länge.

Vorzugsweise erstrecken sich die beiden länglichen Schlitze über höchstens 90%, weiter bevorzugt über höchstens 80%, insbesondere bevorzugt über höchstens 70% der Länge des länglichen Grundkörpers. Dabei sind die beiden länglichen Schlitze jeweils von den Stirnflächen des Grundkörpers beabstandet, so dass zwischen den Stirnflächen und den beiden länglichen Schlitzen jeweils ein Stirnbereich besteht, welcher über keine Schlitze verfügt. Die beiden länglichen Schlitze sind bevorzugt derart im länglichen Grundkörper angeordnet, dass die beiden Stirnbereiche dieselben Dimensionen aufweisen, d.h. dass die Enden der beiden länglichen Schlitze jeweils im selben Abstand zu den Stirnflächen des länglichen Grundkörpers stehen.

Die beiden länglichen Schlitze teilen dabei den Grundkörper in Querrichtung in zwei seitliche Stege sowie einen mittleren Steg.

Vorzugsweise sind die beiden länglichen Schlitze im Kontaktbereich der Oberseite des länglichen Grundkörpers angeordnet. Insbesondere bevorzugt erstrecken sich die beiden länglichen Schlitze über die gesamte Länge des Kontaktbereichs in Längsrichtung des länglichen Grundkörpers. Alternativ können die beiden länglichen Schlitze sich jedoch auch nur über einen Teil der Länge des Kontaktbereichs erstrecken.

Durch die Aufnahme der Profilschenl<el des Verschleissschutzelements in die beiden länglichen Schlitze wird das Verschleissschutzelement lösbar am länglichen Grundkörper befestigt.

Bevorzugt ist das Verschleissschutzelement ohne zusätzliche Befestigungsmittel am Grundkörper befestigt, insbesondere ohne Schrauben, Stifte, Bohrungen und/oder Klebstoffe. Es besteht daher zwischen dem Verschleissschutzelement und der Oberseite des Grundkörpers keine mechanische oder stoffschlüssige Verbindung, welche einer Entfernung des Verschleissschutzelements in einer Richtung senkrecht zur Oberseite entgegenwirken könnte. Damit kann das Verschleissschutzelement zwar an der Oberseite des Grundkörpers aufliegen, es ist aber nicht unlösbar daran befestigt.

Vorzugsweise besteht die erfindungsgemässe Dichtung ausschliesslich aus dem Grundkörper und dem Verschleisselement. Dies vereinfacht die Herstellung der Dichtung stark, da lediglich zwei Teile zusammengefügt werden müssen.

Vorzugsweise ist der Grundkörper und/oder das Verschleisselement, besonderes bevorzugt beide, je einstückig gefertigt.

Im Speziellen handelt es sich beim Grundkörper und/oder beim Verschleisselement um einen massiven Körper, welcher keine Hohlräume aufweist. Dies vereinfacht die Herstellung weiter.

Gemäss einer weiteren Ausführungsform ist es auch möglich, im Grundkörper Löcher und/oder Aussparungen vorzusehen, beispielsweise um die Dichtung an einer flüssigl<eitsspeichernden Kammer, insbesondere einer Rakelkammer, zu befestigen.

Vorzugsweise verfügen die zwei Profilschenkel jeweils an einer Kante, die der jeweiligen Seitenkante der rechteckigen Fläche gegenüberliegt, über mindestens einen Vorsprung, welcher insbesondere rechtwinklig vom jeweiligen Profilschenkel absteht.

Mittels dieser Vorsprünge können die Profilschenkel kraft- und/oder formschlüssig innerhalb der beiden länglichen Schlitze lösbar verankert werden. Die Vorsprünge weisen insbesondere die Form eines Hakens auf. Alternativ können die Vorsprünge jedoch auch in einer anderen Form vorliegen, insbesondere in der Form einer Verdickung oder ähnlich. Der mindestens eine Vorsprung erstreckt sich vorzugsweise über die gesamte Länge der jeweiligen Kante des entsprechenden Profilschenkels.

Bevorzugt weisen die zwei Profilschenkel relativ zu einer Normalen der rechteckigen Fläche einen Winkel von 1° bis 30°, vorzugsweise von 5° bis 20° auf, so dass die Kanten der Profilschenkel, die den jeweiligen Seitenkanten der rechteckigen Fläche gegenüberstehen, in einem geringeren Abstand zueinander liegen, als der Abstand zwischen den zwei Seitenkanten entlang denen sich die Profilschenkel erstrecken.

Durch diese gewinkelte Anordnung der beiden Profilschenkel kann eine Verklemmung des Verschleisselements am mittleren Steg des länglichen Grundkörpers erreicht werden, womit das Verschleissschutzelement besonders gut auf der Oberseite des länglichen Grundkörpers lösbar befestigt werden kann.

Vorzugsweise sind die Seitenkanten der rechteckigen Fläche, entlang denen sich die Profilschenkel erstrecken, gerundet ausgebildet, wobei diese insbesondere eine Rundung mit einem konstanten Radius aufweisen.

Die Rundung ist vorzugsweise konvex ausgebildet. Durch die Ausbildung der Seitenkanten mit einer Rundung können Kräfte, die im Übergang zwischen dem Profilschenl<el und der rechteckigen Fläche auftreten, gut abgeleitet werden. Ferner wird dadurch das Auftreten von Kraftspitzen in diesem Bereich verhindert.

Der Aussenradius der Rundung, das heisst, der Radius der Rundung von einer Seite der rechteckigen Fläche, die bei bestimmungsgemässen Gebrauch der Dichtung zur Walze hin gerichtet ist, zum Profilschenl<el beträgt vorzugsweise von 0.5mm bis 5mm, insbesondere von 1mm bis 2mm. Vorzugsweise weist das Verschleissschutzelement auch im Bereich des Übergangs zwischen einer Seite der rechteckigen Fläche, die bei bestimmungsgemässen Gebrauch der Dichtung auf dem länglichen Grundkörper aufliegt, und dem jeweiligen Profilschenkel ebenfalls eine Rundung auf. Diese Rundung ist vorzugsweise konkav ausgebildet und weist vorzugsweise einen Radius von 0.1mm bis 3mm auf, insbesondere bevorzugt von 0.2mm bis 1mm.

Vorzugsweise weisen die beiden länglichen Schlitze des Grundkörpers jeweils eine Breite auf, die kleiner als die Dicke der Profilschenkel ist.

Die Breite der beiden länglichen Schlitze liegt in der Querrichtung des länglichen Grundkörpers. Die Dicke der beiden länglichen Schlitze beträgt vorzugsweise jeweils 0.05mm bis 2mm, insbesondere 0.1mm.

Das Verschleissschutzelement besteht vorzugsweise aus einem Material, welches härter ist als das Material des Grundkörpers.

Vorzugsweise liegt an der Oberseite des Grundkörpers ein erster Auflagebereich für ein Arbeitsrakel sowie ein zweiter Auflagebereich für ein Schliessral<el vor, wobei die beiden Auflagebereiche in einem Winkel zueinander stehen.

Der erste Auflagebereich für eine Arbeitsrakel sowie der zweite Auflagebereich für eine Schliessral<el sind vorzugsweise je als eine ebene Fläche ausgestaltet. Damit können die üblicherweise flachen Rakel auf der gesamten Fläche des jeweiligen Auflagebereichs optimal gestützt werden.

Die beiden Auflagebereiche sind vorzugsweise so ausgestaltet, dass der Kontaktbereich zum Anlegen der Dichtung an die rotierende Walze zwischen den beiden Auflagebereichen der Rakel vorliegt.

Der erste Auflagebereich für eine Arbeitsrakel sowie der zweite Auflagebereich für eine Schliessral<el stehen beispielsweise in einem Winkel von 90° - 180° relativ zueinander. Dies ist eine besonders geeignete Konfiguration für ein I<ammerral<elsystem. Es können aber für spezielle Anwendungen auch andere Winkel vorgesehen werden.

Die vorliegende Anmeldung bezieht sich weiter auf ein Verschleissschutzelement für eine Dichtung gemäss der oben stehenden Beschreibung. Das Verschleissschutzelement weist eine rechteckige Fläche auf, die von vier Seitenkanten begrenzt wird. Ferner verfügt das Verschleissschutzelement über zwei Profilschenkel, die sich entlang von zwei einander gegenüberliegenden Seitenkanten der vier Seitenkanten der rechteckigen Fläche über deren gesamte Länge erstrecken und von der rechteckigen Fläche in einer Richtung abstehen.

Das Verschleissschutzelement kann über eines oder mehrere der in der oben stehenden Beschreibung beschriebenen Merkmale verfügen.

Die vorliegende Anmeldung bezieht sich auch auf ein I<ammerral<elsystem mit einer flüssigl<eitsspeichernden Kammer, insbesondere auf eine Rakelkammer, an welcher eine rotierbare Walze, insbesondere eine Rasterwalze, angeordnet ist. Das I<ammerral<elsystem umfasst ein parallel zu einer Längsachse der Walze eine an der Walze anliegende Arbeitsrakel und eine an der Walze anliegende Schliessral<el. Die flüssigl<eitsspeichernde Kammer ist wenigstens im Bereich eines ersten stirnseitigen Endes der Walze mit einer Dichtung gemäss der oben stehenden Beschreibung abgedichtet, wobei die Dichtung mit ihrem Verschleissschutzelement an der rotierbaren Walze anliegt.

Der Kontaktbereich zum Anlegen der Dichtung an die rotierende Walze sowie das darauf vorliegende Verschleissschutzelement sind insbesondere konkav gekrümmt und die Krümmung des Kontaktbereichs und des Verschleissschutzelements sind komplementär zur Krümmung der rotierenden Walze ausgestaltet. Die Krümmung des Kontaktbereichs sowie des Verschleissschutzelements kann durch die Auflage der Walze entstehen. Alternativ kann der Kontaktbereich jedoch bereits eine entsprechenden Krümmung aufweisen, wobei das Verschleissschutzelement beim Aufsetzen auf den Kontaktbereich oder bei Kontakt mit der Walze entsprechend gekrümmt wird.

Dies ermöglicht eine besonders zuverlässige und kostengünstige Abdichtung der Rakelkammer gegenüber der rotierbaren Walze.

Vorzugsweise ist ein zweites stirnseitiges Ende der Walze mit einer weiterer Dichtung gemäss oben stehender Beschreibung abgedichtet.

Die vorliegende Anmeldung bezieht sich ferner auf ein Verfahren zur Herstellung einer Dichtung gemäss oben stehender Beschreibung. In einem ersten Schritt wird der länglicher Grundkörper hergestellt. Anschliessend werden die beiden parallelen, länglichen Schlitze in den Grundkörper geschnitten, insbesondere mittels eines Wasserstrahlschneidverfahrens. In einem nächsten Schritt wird das Verschleissschutzelement durch ein Extrusionsverfahren hergestellt. Schlussendlich wird das Verschleissschutzelement auf die Oberseite des Grundkörpers aufgesteckt, wobei die Profilschenkel in die zwei parallelen, länglichen Schlitze des Grundkörpers eingeführt werden.

Die Herstellung des länglichen Grundkörpers kann durch ein geeignetes Verfahren, wie z.B. Spritzguss erfolgen. Alternativ kann der Grundkörper auch aus eine Platte eines entsprechenden Materials gestanzt oder geschnitten werden, z.B. mittels eines Wasserstrahlschneidverfahrens.

Zum Schneiden der beiden parallelen Schlitze kann alternativ auch ein anderes Verfahren als ein Wasserstrahlschneidverfahren eingesetzt werden, beispielsweise ein Laserschneidverfahren oder ein Stanzverfahren.

Dadurch, dass das Verschleissschutzelement mittels eines Strangextrusionsverfahrens hergestellt wird, ist dieses einfach und kostengünstig herstellbar.

Das Schneiden des Verschleissschutzelements kann händisch mittels eines Cutters oder ähnlich erfolgen, oder alternativ auch mit Hilfe einer Schneidmaschine.

Vorzugsweise wird das Verschleissschutzelement als Strang hergestellt, wobei anschliessend aus dem Strang ein Verschleissschutzelement geschnitten wird. Dies bietet den Vorteil, dass ein Verschleissschutzelement mit einer zum länglichen Grundkörper, mit welchem das Verschleissschutzelement eingesetzt werden soll, passenden Länge geschnitten werden kann.

Bevorzugt wird der Strang vor dem Schneiden zu einer Rolle aufgerollt, wobei das Verschleissschutzelement anschliessend zeitlich versetzt geschnitten werden kann. Dies vereinfacht die Handhabung und Lagerung des Verschleissschutzelements, da die Rolle einfach gelagert werden und immer dann, wenn ein neues Verschleissschutzelement gebraucht wird, dieses in entsprechender Länge von der Rolle geschnitten werden kann.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: eine schematische Ansicht einer beispielhaften Ausführungsform eines länglichen Grundkörpers, welcher zur Bildung einer erfindungsgemässen Dichtung vorgesehen ist;
- Fig. 2: eine schematische Darstellung einer beispielhaften Ausführungsform einer erfindungsgemässen Dichtung mit dem länglichen Grundkörper gemäss Fig. 1;
- Fig. 3: eine schematische Darstellung einer beispielhaften Ausführungsform eines Verschleissschutzelements für eine erfindungsgemässe Dichtung;
- Fig. 4: einen Querschnitt durch das Verschleissschutzelement aus der Fig. 3 entlang der Linie B - B;
- Fig. 5: eine schematische Darstellung eines auf einer Ausführungsform eines länglichen Grundkörpers aufgesteckten Verschleissschutzelements im Querschnitt;
- Fig. 6: eine schematische Darstellung eines auf einer weiteren Ausführungsform eines länglichen Grundkörpers aufgesteckten Verschleissschutzelements im Querschnitt;
- Fig. 7: eine Seitenansicht einer Ausführungsform eines erfindungsgemässen Kammerrakelsystems;
- Fig. 8: eine Draufsicht der Ausführungsform des I<ammerral<elsystems der Fig. 6.

Grundsätzlich sind in den Figuren gleiche Teile mit gleichen Bezugszeichen versehen.

### Wege zur Ausführung der Erfindung

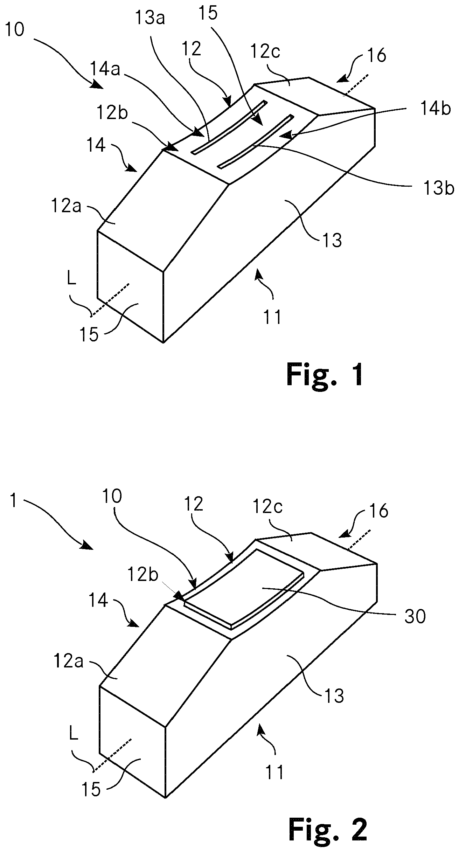

Fig. 1 zeigt eine schematische Ansicht einer beispielhaften Ausführungsform eines länglichen Grundkörpers 10 mit einer Längsachse L, welcher zur Bildung einer erfindungsgemässen Dichtung 40 (siehe Fig. 2) vorgesehen ist.

Der längliche Grundkörper 10 verfügt über eine Oberseite 12, welche bei der Verwendung der Dichtung 10 der rotierenden Walze zugewandt ist, eine der Oberseite 12 gegenüberliegenden Unterseite 11, zwei sich gegenüberliegende Seitenflächen 13, 14, welche bei der Verwendung senkrecht zur Rotationsachse der rotierenden Walze stehen, und zwei sich gegenüberliegende Stirnseiten 15, 16, welche bei der Verwendung parallel zur Rotationsachse der rotierenden Walze stehen. Die Stirnseiten 15, 16 stehen senkrecht zu den Seitenflächen 13, 14 und senkrecht zur Unterseite 11.

An der Oberseite 12 liegt des Weiteren ein erster Auflagebereich 12a für ein Arbeitsrakel, eine Kontaktbereich 12b zum Anlegen der Dichtung an die rotierende Walze, sowie ein zweiter Auflagebereich 12c für ein Schliessral<el vor. Die beiden Auflagebereiche 12a, 12c sind eben und stehen in einem Winkel von z.B. 120° zueinander. Der dazwischen liegenden Kontaktbereich 12b ist gegenüber den Auflagebereichen 12a, 12c auf der gesamten Breite des Grundkörpers 10 abgesenkt, so dass der Auflagebereich 12b in Form einer konkav gekrümmten Ausnehmung an der Oberseite 12 vorliegt.

Auf der Oberseite 12 des länglichen Grundkörpers 10 sind im Kontaktbereich 12b zwei parallele, längliche Schlitze 13a, 13b angeordnet. Die länglichen Schlitze 13a, 13b erstrecken sich von der Oberseite 12 aus in Richtung zur Unterseite 11 des länglichen Grundkörpers 10. Die beiden länglichen Schlitze 13a, 13b teilen hierbei den länglichen Grundkörper 10 im Bereich der I<ontal<tfläche 12b in zwei seitliche Stege 14a, 14b sowie einen Mittelsteg 15.

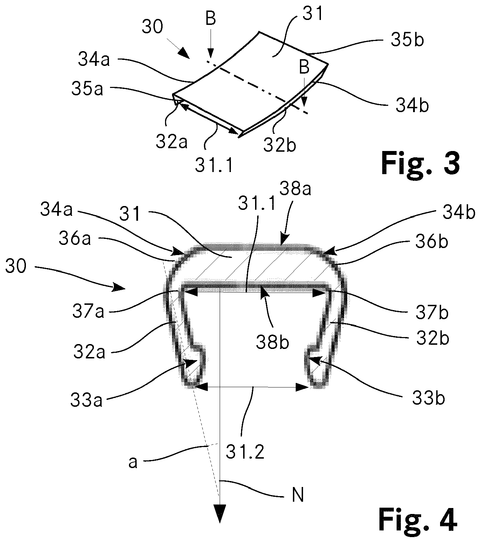

Fig. 2 zeigt schematisch eine beispielhafte Ausführungsform einer erfindungsgemässen Dichtung 1 mit einem länglichen Grundkörper 10 gemäss Fig. 1 mit einem aufgesteckten Verschleissschutzelement 30. Das Verschleissschutzelement 30 deckt den Kontaktbereich 12b teilweise ab. Die Befestigung des Verschleissschutzelement 30 am länglichen Grundkörper 10 erfolgt durch das Einführen von Profilschenkel (siehe Figuren 3 bis 6) des Verschleissschutzelements in die beiden parallelen, länglichen Schlitze 13a, 13b.

Fig. 3 zeigt eine schematische Darstellung einer beispielhaften Ausführungsform eines Verschleissschutzelements 30 für eine erfindungsgemässe Dichtung 1. Das Verschleissschutzelement 30 weist im Wesentlichen die in Form eines U auf. Das Verschleissschutzelement 30 umfasst eine rechteckigen Fläche 31, welche über vier Seitenkanten 34a, 34b, 35a, 35b verfügt, welche die rechteckige Fläche 31 begrenzen. An zwei einander gegenüberliegenden Seitenkanten 34a, 34b des Verschleissschutzelements 30 weist die rechteckige Fläche 31 Profilschenkel 32a, 32b auf, welche von der rechteckigen Fläche 31 abstehen und sich entlang einer der jeweiligen Seitenkanten 34a, 34b erstrecken. Das Verschleissschutzelement 30 ist derart dimensioniert, dass die beiden Profilschenkel in einem ersten Abstand 31.1 voneinander angeordnet sind, wobei der erste Abstand 31.1 dem Abstand der beiden länglichen Schlitze 13a, 13b eines länglichen Grundkörpers 10 entspricht, auf welchem das Verschleissschutzelement 30 eingesetzt werden soll. Bei der gezeigten Ausführungsform des Verschleissschutzelements 30 sind die beiden Seitenkanten 34a, 34b, entlang denen sich die Profilschenkel 32a, 32b erstrecken, länger als die beiden weiteren Seitenkanten 35a, 35b. Alternativ können jedoch alle vier Seitenkanten 34a, 34b, 35a, 35b auch gleich lang ausgebildet sein oder die beiden Profilschenkel 32a, 32b können sich entlang der zwei kürzeren Seitenkanten 35a, 35b erstrecken.

Die Fig. 4 zeigt einen Querschnitt durch das Verschleissschutzelement 30 aus der Fig. 3 entlang der Linie B - B. Wie in der Fig. 4 erkennbar ist, weisen die beiden Profilschenkel 32a, 32b relativ zu einer Normalen N der rechteckigen Fläche 31 einen Winkel a von 1° bis 30° auf. In der Fig. 4 ist der Winkel nur in Bezug auf einen Profilschenkel 32a gezeigt, allerdings nimmt der zweite Profilschenkel 32b denselben Winkel relativ zur Normalen N ein. Durch diese Konfiguration der Profilschenl<el 32a, 32b stehen deren Kanten, die den jeweiligen Seitenkanten 34a, 34b der rechteckigen Fläche 31 gegenüberliegen, in einem zweiten Abstand 31.2 relativ zueinander, der kleiner ist, als der erste Abstand 31.1. An diesen Kanten verfügen die beiden Profilschenkel 32a, 32b je über einen Vorsprung 33a, 33b. Die Vorsprünge 33a, 33b sind bei der gezeigten Ausführungsform in der Form von Haken ausgebildet.

Im Bereich des Übergangs einer ersten Seite 38a der rechteckigen Fläche 31, welche beim bestimmungsgemässen Gebrauch der Dichtung 1 an der Walze anliegt, zu den Profilschenkel 32a, 32b im Bereich der Seitenkanten 34a, 34b weist das Verschleissschutzelement 30 jeweils eine konvexe Rundung 36a, 36b mit einem konstanten Aussenradius auf. Im Übergangsbereich zwischen einer zweiten Seite 38b der rechteckigen Fläche 31, welche der ersten Seite 38a gegenüberliegt und beim bestimmungsgemässen Gebrauch der Dichtung 1 auf der Oberseite 12 des länglichen Grundkörpers 10 aufliegt, und den Profilschenkel 32a, 32b weist das Verschleissschutzelement 30 eine weitere, konkave Rundung mit einem konstanten Innenradius auf.

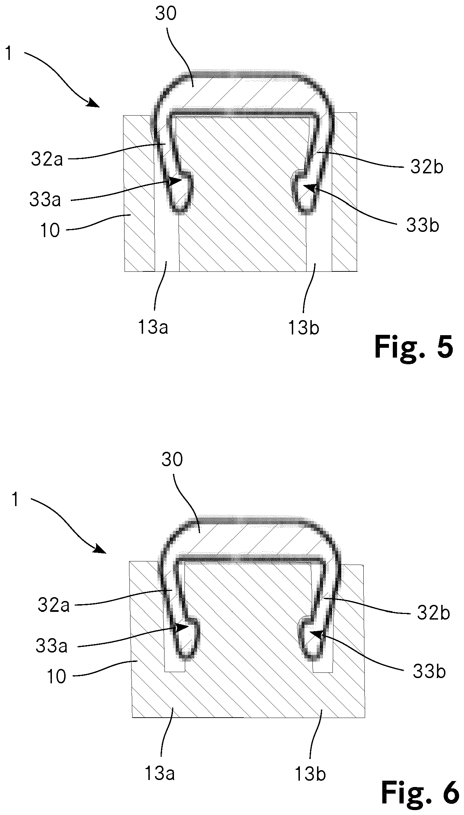

Wie die Fig. 5 schematisch in einer Querschnittsdarstellung zeigt, wird das Verschleissschutzelement 30 in einer Richtung senkrecht zur Oberseite 12 des Grundkörpers 10 auf diesen aufgesteckt, wobei die Profilschenkel 32a, 32b in die beiden parallelen, länglichen Schlitze 13a, 13b eingeführt werden, bis die zweite Seite 38b der rechteckigen Fläche 31 auf der Oberseite 12 des länglichen Grundkörpers 10 aufliegt. Die beiden Vorsprünge 33a, 33b weisen eine grössere Dicke auf, als der Rest der Profilschenkel 32a, 32b. Durch die vergrösserte Dicke der Vorsprünge 33a, 33b sowie durch die angewinkelte Ausgestaltung der Profilschenl<el 32a, 32b relativ zu einer Normalen der rechteckigen Fläche 31 wird das Verschleissschutzelement 30 in einen Presssitz mit dem länglichen Grundkörper 10 gebracht und somit mit diesem lösbar verklemmt. Die in dieser Figur gezeigte Ausführungsform des länglichen Grundkörpers 10 weist längliche Schlitze 13a, 13b auf, welche sich von der Oberseite 12 bis zur Unterseite 11 erstrecken, d.h. sich über die gesamte Distanz zwischen der Oberseite 12 und der Unterseite 13 erstrecken.

Die Fig. 6 zeigt schematisch in einer Querschnittsdarstellung ein auf eine weitere Ausführungsform des länglichen Grundkörpers 10 aufgestecktes Verschleissschutzelement 30. Bei dieser Ausführungsform des Grundkörpers 10 erstrecken sich die beiden länglichen Schlitze 13a, 13b von der Oberseite 12 aus in Richtung der Unterseite 11, reichen jedoch nicht bis zu dieser. Das heisst, dass die beiden länglichen Schlitze 13a, 13b sich nur über einen Teil der Distanz zwischen der Oberseite 12 und der Unterseite 11 erstrecken. Die Befestigung des Verschleissschutzelements 30 am länglichen Grundkörper 10 erfolgt gleich wie in der Fig. 5 gezeigt.

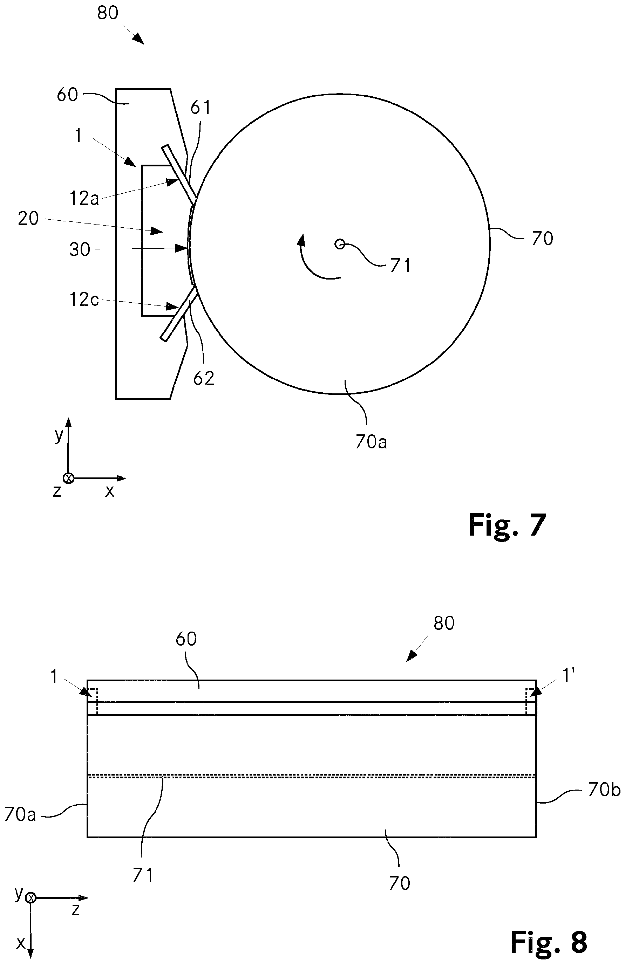

Die Figuren 7 und 8 zeigen schematisch eine Ausführungsform eines erfindungsgemässen I<ammerral<elsystems 80, mit einer flüssigl<eitsspeichernden Rakelkammer 60, welcher an einer um eine Längsachse 71 rotierbare Rasterwalze 70 angeordnet ist. Die Fig. 7 ist eine Seitenansicht des I<ammerral<elsystems 80 und die Fig. 8 zeigt eine Draufsicht des Kammerrakelsystems 80.

Parallel zu Längsachse 71 der Walze 70 liegt zum Abstreifen von überschüssiger Farbe im oberen Bereich der Rakelkammer 60 eine Arbeitsrakel 61 mit ihrem freien Ende an der Walze 70 an. Im unteren Bereich liegt in gleicher Weise eine Schliessral<el 62 an der Walze 70 an. Die Rakelkammer 60 ist am ersten stirnseitigen Ende 70a der Walze 70 mit einer Dichtung 1 abgeschlossen. Dabei wird das auf dem Grundkörper 20 vorliegende Verschleissschutzelement 30 gegen die Mantelfläche der Walze 70 gedrückt und die beiden Rakel 61, 62 liegen auf den Auflagebereichen 12a, 12c auf. Damit wird die Rakelkammer 60 im Bereich des ersten stirnseitigen Endes 70a der Walze 70 mit der Dichtung 1 vollständig abgedichtet.

Am gegenüberliegenden zweiten freien Ende der Walze 70 ist die Rakelkammer 60 in gleicher Weise mit einer zweiten Dichtung 1' abgedichtet, wobei die zweite Dichtung 1' baugleich ist, wie die erste Dichtung 1. Dies ist in Fig. 8 dargestellt.

## Patentansprüche

1. Dichtung zur stirnseitigen Abdichtung einer flüssigl<eitsspeichernden Kammer, insbesondere einer Rakelkammer, gegenüber einer in der Kammer rotierenden Walze, insbesondere einer Rasterwalze, umfassend:
a) einen länglichen Grundkörper mit einer Oberseite, welche bei der Verwendung der rotierenden Walze zugewandt ist, eine der Oberseite gegenüberliegende Unterseite, zwei sich gegenüberliegende Seitenflächen, welche bei der Verwendung senkrecht zur Rotationsachse der rotierenden Walze stehen und zwei sich gegenüberliegende Stirnseiten, welche bei der Verwendung parallel zur Rotationsachse der rotierenden Walze stehen;
b) wobei die Oberseite über einem Kontaktbereich zum Anlegen der Dichtung, an die rotierende Walze verfügt;
c) ein Verschleissschutzelement, welches auf der Oberseite des länglichen Grundkörpers angebracht ist und sich wenigstens teilweise über den Kontaktbereich erstreckt, so dass der Kontaktbereich vor Verschleiss durch den rotierenden Zylinder geschützt wird,
**dadurch gekennzeichnet, dass**
d) das Verschleissschutzelement über eine rechteckige Fläche verfügt, die von vier Seitenkanten begrenzt wird und welche auf der Oberseite des länglichen Grundkörpers aufliegt, sowie zwei Profilschenkel, die sich entlang von zwei einander gegenüberliegenden Seitenkanten der vier Seitenkanten der rechteckigen Fläche über deren gesamte Länge erstrecken und von der rechteckigen Fläche in einer Richtung abstehen,
e) und dass der Grundkörper über zwei längliche Schlitze verfügt, die sich in Längsrichtung innerhalb des Grundkörpers von der Oberseite aus in Richtung zur Unterseite erstrecken und welche parallel zueinander stehen, wobei die Profilschenkel des Verschleissschutzelements in diese länglichen Schlitze aufgenommen sind.

2. Dichtung gemäss Anspruch 1, **dadurch gekennzeichnet, dass** die zwei Profilschenkel jeweils an einer Kante, die der jeweiligen Seitenkante der rechteckigen Fläche gegenüberliegt, über mindestens einen Vorsprung verfügen, welcher insbesondere rechtwinklig vom jeweiligen Profilschenkel abstehen.

3. Dichtung gemäss einem der Ansprüche 1 oder 2, **dadurch gekennzeichnet, dass** die zwei Profilschenkel relativ zu einer Normalen der rechteckigen Fläche in einem Winkel von 1° bis 30°, vorzugsweise von 5° bis 20° stehen, so dass die Kanten der Profilschenl<el, die der jeweiligen Seitenkante der rechteckigen Fläche gegenüberstehen, in einem geringeren Abstand zueinander liegen, als der Abstand zwischen den zwei Seitenkanten entlang denen sich die Profilschenkel erstrecken.

4. Dichtung gemäss einem der Ansprüche 1 bis 3, **dadurch gekennzeichnet, dass** die Seitenkanten der rechteckigen Fläche, entlang denen sich die Profilschenkel erstrecken, gerundet ausgebildet sind, wobei diese insbesondere eine Rundung mit einem konstanten Radius aufweisen.

5. Dichtung gemäss einem der Ansprüche 1 bis 4, **dadurch gekennzeichnet, dass** die Schlitze des Grundkörpers eine Breite aufweisen, die kleiner als die Dicke der Profilschenkel ist.

6. Dichtung gemäss einem der Ansprüche 1 bis 5, **dadurch gekennzeichnet, dass** das Verschleissschutzelement aus einem Material besteht, welches härter ist als das Material des Grundkörpers.

7. Dichtung gemäss einem der Ansprüche 1 bis 6, **dadurch gekennzeichnet, dass** an der Oberseite des Grundkörpers ein erster Auflagebereich für ein Arbeitsrakel sowie ein zweiter Auflagebereich für ein Schliessral<el vorliegt, wobei die beiden Auflagebereiche in einem Winkel zueinander stehen.

8. Verschleissschutzelement für eine Dichtung gemäss einem der Ansprüche 1 bis 7, umfassend eine rechteckige Fläche, die von vier Seitenkanten begrenzt wird sowie zwei Profilschenkel, die sich entlang von zwei einander gegenüberliegenden Seitenkanten der vier Seitenkanten der rechteckigen Fläche über deren gesamte Länge erstrecken und von der rechteckigen Fläche in einer Richtung abstehen.

9. Kammerrakelsystem, umfassend eine flüssigl<eitsspeichernden Kammer, insbesondere einer Rakelkammer, an welcher eine rotierbare Walze, insbesondere eine Rasterwalze, angeordnet ist, sowie ein parallel zu einer Längsachse der Walze eine an der Walze anliegende Arbeitsrakel und eine an der Walze anliegende Schliessral<el vorliegt, wobei die flüssigl<eitsspeichernde Kammer wenigstens im Bereich eines ersten stirnseitigen Endes der Walze mit einer Dichtung gemäss einem der Ansprüche 1 - 7 abgedichtet ist, wobei die Dichtung mit ihrem Verschleisselement an der rotierbaren Walze anliegt.

10. Kammerrakelsystem nach Anspruch 9, wobei ein zweites stirnseitiges Ende der Walze mit einer weiterer Dichtung gemäss einem der Ansprüche 1 - 7 abgedichtet ist.

11. Verfahren zur Herstellung einer Dichtung gemäss einem der Ansprüche 1 bis 7, **gekennzeichnet durch** die Schritte:
a) Herstellung des Grundkörpers;
b) Schneiden der beiden parallelen Schlitze in den Grundkörper, insbesondere mittels eines Wasserstrahlschneidverfahrens;
c) Herstellung des Verschleissschutzelement durch ein Extrusionsverfahren;
d) Aufstecken des Verschleissschutzelements auf die Oberseite des Grundkörpers, wobei die Profilschenkel in die zwei parallelen Schlitze des Grundkörpers eingeführt werden.

12. Verfahren gemäss Anspruch 11, **dadurch gekennzeichnet, dass** im Schritt c) ein Strang hergestellt wird, wobei anschliessend aus dem Strang mindestens ein Verschleissschutzelement geschnitten wird.

13. Verfahren gemäss Anspruch 12, **dadurch gekennzeichnet, dass** der Strang vor dem Schneiden zu einer Rolle aufgerollt wird und zeitlich versetzt anschliessend zu mindestens einem Verschleissschutzelement geschnitten wird.
